(19) **Europäisches Patentamt European Patent Office Office européen des brevets**

(11) **EP 1 142 288 B1**

(12) **EUROPEAN PATENT SPECIFICATION**

(45) Date of publication and mention of the grant of the patent:
**21.11.2007 Bulletin 2007/47**

(51) Int Cl.:
***H04M 9/08*** *(2006.01)*

(21) Application number: **99965628.3**

(22) Date of filing: **07.12.1999**

(86) International application number:
**PCT/SE1999/002288**

(87) International publication number:
**WO 2000/039991 (06.07.2000 Gazette 2000/27)**

(54) **METHODS AND APPARATUS FOR ADAPTIVE SIGNAL GAIN CONTROL IN COMMUNICATIONS SYSTEMS**

VERFAHREN UND VORRICHTUNG ZUR ADAPTIVEN SIGNALVERSTÄRKUNGSSTEUERUNG IN KOMMUNIKATIONSSYSTEMEN

PROCEDES ET APPAREILS DE COMMANDE ADAPTATIVE DE GAIN DE SIGNAUX DANS DES SYSTEMES DE COMMUNICATION

(84) Designated Contracting States:
**DE GB IT**

(30) Priority: **23.12.1998 US 219517**

(43) Date of publication of application:
**10.10.2001 Bulletin 2001/41**

(73) Proprietor: **TELEFONAKTIEBOLAGET LM ERICSSON (publ) 164 83 Stockholm (SE)**

(72) Inventors:
• **SÖRQVIST, Patrik S-141 43 Huddinge (SE)**
• **SVENSSON, Tomas S-112 34 Stockholm (SE)**
• **SUNDQVIST, Jim S-976 32 Lulea (SE)**
• **ERIKSSON, Anders 75758 Uppsala (SE)**

(74) Representative: **HOFFMANN EITLE Patent- und Rechtsanwälte Arabellastrasse 4 81925 München (DE)**

(56) References cited:
**EP-A- 0 739 123          EP-A- 0 765 066
US-A- 4 700 382          US-A- 5 357 567
US-A- 5 668 871**

**Description**

**Field of the Invention**

The present invention relates to communications systems, and more particularly, to adaptive gain control in communications systems.

**Background of the Invention**

Recently, there has been a steady push to bring Internet telephony into the mainstream. An ability to transmit and receive high-quality audio signals in real time via the Internet will provide consumers with cost effective and heretofore unattainable communications solutions, particularly in the multimedia computer context. However, a present obstacle to successful implementation of such Internet telephony applications relates to audio signal gain control. Specifically, it is difficult in practice to adjust the level of an audio signal (e.g., a microphone output signal) to ensure proper and consistent operation of the speech coders and other signal processing algorithms which are commonly used to prepare the audio signal for transmission across the Internet. In other words, many such signal processing algorithms are optimized based on full use of a particular dynamic input range, and therefore require precise signal level adjustment so that incoming signals fill, but do not exceed, that range.

Conventionally, signal level adjustment is left to the application user or is made automatically based on calibration performed when the application is first installed or is first used. For example, a user is often instructed to make gain control adjustments on a multimedia computer soundboard so that a line-in or microphone signal is properly processed for transmission. Alternatively, the user can be instructed to provide a calibration signal (e.g., by speaking into a microphone or providing an audio line-in signal) upon application installation and setup, so that the soundboard gain can be automatically set.

However, since the user cannot hear the microphone or line-in signal, and since no single gain setting can account for future changes in signal level (e.g.; due to changes in microphone position or differences in voice strength between users), these solutions have proven inadequate. At times, the soundboard gain is set too low, causing the speech coder and/or other processing algorithms to be less accurate. Consequently, the receiving user tends to increase the gain at the far end, resulting in a received speech signal having a poor signal-to-noise ratio and possibly including disturbing measurement noise. At other times, the soundboard gain is set too high, causing signal saturation which can prevent the speech coder and/or other processing algorithms from working as intended. Although the receiving user can decrease the far-end gain, the received speech signal may nonetheless be distorted.

From US 5,357,567 a method and apparatus for emulating half duplex operation over full duplex communication channels in a speaker phone in a handsfree setup is known, wherein signal estimators estimate peak and average signal levels as well as minimum signal levels of a near and microphone input and a far-end input for output to a near-end loudspeaker. The estimates are fed to a gain generator that determines how the gains of the first and second audio inputs should vary in order to allow either the signal associated with the first input or the signal associated with the second input to dominate and to be passed on to the outputs.

From EP 0 765 066 A2 a speaker phone anti-howling system is known which serves to eliminate undesirable howling attributable to sudden changes in the acoustic echo path between a speaker phone microphone and loudspeaker during speaker phone conversations.

Consequently, there is a need for improved methods and apparatus for adjusting signal levels in communications systems.

**Summary of the Invention**

The present invention fulfills the above-described and other needs by providing techniques for adaptive gain control. Advantageously, the disclosed techniques provide correctly adjusted signal levels during the entirety of a conversation and are resilient to background noise and loudspeaker echo. Further, the disclosed techniques can account for multiple near-end speakers, as well as changes in near-end environment (e.g., changes in user and microphone position).

An exemplary adaptive gain controller according to the invention includes a gain control processor configured to adjust an analog gain applied to a microphone output signal based on measurements of the microphone output signal and on measurements of a loudspeaker input signal. For example, the analog gain can be adjusted based on estimates of the average and peak speech levels in the microphone signal and on a determination of whether the microphone output signal is saturated. In exemplary embodiments, the analog gain is adjusted such that the average speech level in the microphone output signal approaches a target average level and such that the peak speech level in the microphone output signal does not exceed a maximum peak level. To improve performance, the average and peak speech level estimates are updated, in exemplary embodiments, only when voice activity detectors indicate that the microphone output signal includes speech and that the loudspeaker input signal does not include speech.

An exemplary method for adjusting the analog gain applied to a signal prior to digitization via an analog-to-digital converter includes the steps of: determining whether a digital output of the analog-to-digital converter is saturated; decreasing the analog gain if the digital output is saturated; comparing a measured average level of the communications signal to a target average level if the digital output is not saturated; decreasing the analog gain if the measured average level is too far above the target average level; comparing a measured peak level of the communications signal to a maximum peak level of the communications signal if the measured average level is too far below the target average level; and increasing the analog gain if the measured peak level is below the maximum level.

The above-described and other features and advantages of the invention are explained in detail hereinafter with reference to the illustrative examples shown in the accompanying drawings. Those of skill in the art will appreciate that the described embodiments are provided for purposes of illustration and understanding and that numerous equivalent embodiments are contemplated herein.

## Brief Description of the Drawings

Figure 1 is a block-diagram of a communications system incorporating an exemplary adaptive gain control arrangement according to the invention.

Figure 2 is a flow diagram depicting steps in an exemplary method of adaptive gain control according to the invention.

## Detailed Description of the Invention

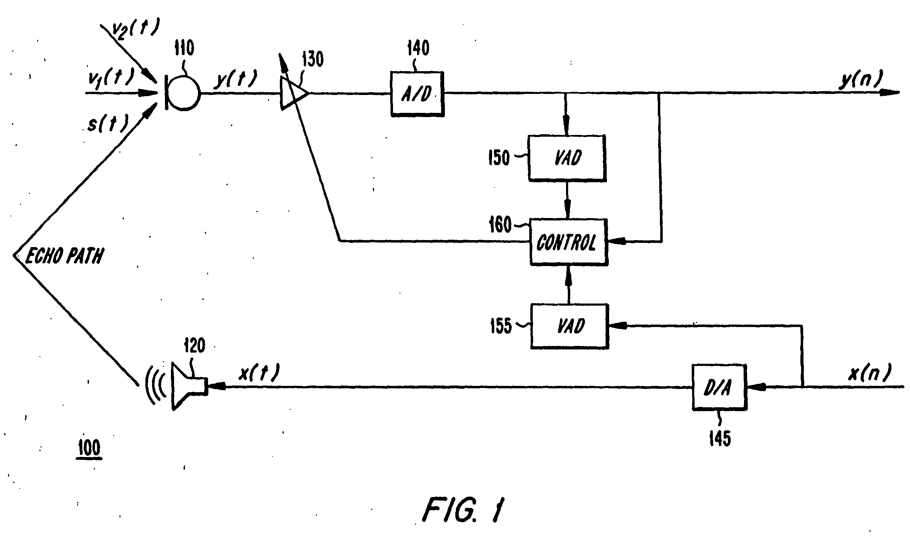

Figure 1 depicts an exemplary Internet telephony system 100 incorporating an adaptive gain control arrangement according to the invention. Such a system can be included, for example, in a multimedia personal computer. Those of skill in the art will appreciate that the below described functionality of the various elements of the system 100 of Figure 1 can be implemented using known analog and digital signal processing hardware and/or a general purpose digital computer.

As shown, the exemplary system 100 includes a microphone 110, a loudspeaker 120, an adjustable-gain amplifier 130, an analog-to-digital converter 140, a digital-to-analog converter 145, first and second voice activity detectors (VADs) 150, 155, and a control processor 160. A far-end digital signal $x(n)$ (e.g., digitized far-end speech and noise received via the Internet) is input to the digital-to-analog converter 145 and to the second voice activity detector 155. The digital-to-analog converter 145 converts the far-end signal $x(n)$ to the analog domain, and the resulting far-end analog signal $x(t)$ is input to the loudspeaker 120 for presentation to a near-end user (not shown).

Additionally, near-end speech $v_1(t)$, near-end noise $v_2(t)$ and far-end echo $s(t)$ are received at the microphone 110 and combine to produce a near-end analog signal $y(t)$ which is amplified by the adjustable gain amplifier 130 and digitized by the analog-to-digital converter 140. The resulting digital near-end signal $y(n)$ is input to the first voice activity detector 150 and to the control processor 160, and is also passed on to the far-end (e.g., via the Internet). Output from each voice activity detector 150, 155 is input to the control processor 160.

In operation, the control processor 160 monitors the near-end digital signal $y(n)$, as well as the output from each voice activity detector 150, 155, and adjusts the gain of the amplifier 130 so that the level of the near-end digital signal $y(n)$ is suitable for input to a speech coder (not shown) and/or any other digital signal processing algorithm which may be used to prepare the near-end signal $y(n)$ for transmission. Though it is possible to make small adjustments to the digital signal level after analog-to-digital conversion and just prior to input to the speech coder or other algorithms, larger adjustments are made via the amplifier 130 to avoid undue amplification of measurement noise and to prevent distortion due to signal clipping at the analog-to-digital converter 140.

Generally, the control processor 160 measures the average level of near-end speech in the near-end signal $y(n)$ and adjusts the gain of the amplifier 130 so as to continually push the measured average level toward a target, or preferred average level (e.g., -22dBoV, as defined in the Subscriber Loop Signaling and Transmission Handbook, Whitman D. Reeve, IEEE Press, 1992, pp. 95-97). In order to make the gain control system more robust, gain adjustments can be conditioned, as is described in detail below, on the outputs of the voice activity detectors 150, 155 and on a test for signal saturation. Further, as is also described in detail below, gain adjustments can also be conditioned on a measurement of the peak level of the near-end speech in order to prevent gain adjustment errors when two or more near-end users are speaking.

According to an exemplary embodiment, a running estimate of the average level of near-end speech in the near-end signal $y(n)$ is updated at the end of each of a succession of near-end signal sample blocks (e.g., at the end of each 160-sample GSM speech frame). However, to avoid erroneous gain adjustments based on periods when the near-end user is not speaking, the estimate of the average near-end speech level is updated only when the first voice activity detector 150 indicates that the near-end signal $y(n)$ includes speech. Further, since far-end echo can cause the first voice activity detector 150 to indicate speech even though the near-end user is not speaking, the estimate is updated only when the second voice activity detector 155 indicates that the far-end signal $x(n)$ does not include speech. Techniques for constructing the voice activity detectors 150, 155 are well known and are described, for example, in ETSI, GSM 06: 32, European Digital Cellular Telecommunication System Voice Activity Detection, Version 4.3.1, April 1998.

During periods of near-end single-talk (as indicated by the voice activity detectors 150, 155), the running estimate of the average near-end speech level is updated at the end of each block of samples (e.g., at the end of each GSM frame) by first computing an average level $r_y$ of the overall near-end signal $y(n)$ for the block of samples. In other words, for a block of N (e.g., 160) samples, the average near-end signal level $r_y$ is computed as:

$$r_y = \frac{1}{N} \sum_{n=0}^{N-1} y(n)^2 .$$

Then, the near-end speech level for the frame is computed by subtracting an estimate of the near-end noise level (which can be computed during periods of no near-end speech and no far-end speech, as indicated by the voice activity detectors 150, 155) from the computed near-end signal level. In other words, the near-end speech level $r_{v1}$ is computed as the difference between the near-end signal level $r_y$ and the noise level $r_{v2}$:

$$r_{v1} = r_y - r_{v2} .$$

Once the near-end speech level for the frame is known, the running estimate of the average near-end speech level $r_{av}$ is updated by smoothing from frame to frame. In other words, the average level estimate $r_{av}$ is updated as:

$$r_{av} = \alpha r_{av} + (1 - \alpha) r_{v1}$$

where $\alpha$ is an update coefficient (a real number) set to provide a balance between speed of gain adaptation and system stability. Empirical studies have shown that 0.995 is a suitable value for the update coefficient $\alpha$.

By monitoring the average near-end speech level in this block-wise fashion, periodic amplifier gain adjustments can be made to keep the average near-end speech level at or near the target level (e.g., within a range of values around the target level). For example, the gain can be incrementally adjusted every several blocks (e.g., every 30 to 50 GSM frames) based on a comparison of the running average estimate $r_{av}$ and the target value (e.g., -22dBoV). In other words, if the running estimate $r_{av}$ is too far above or below the target level at the end of several blocks, then the amplifier gain can be stepped down or up by an appropriate amount (e.g., 1-3dB). By adjusting the gain only once every several blocks or frames, and by gradually stepping the gain toward the target value, bothersome gain fluctuations are avoided. Advantageously, the interval (e.g., the number of blocks or frames) between gain adjustments can be changed over time. For example, adjustments can be made more frequently during an early training period and less frequently thereafter.

While the above described technique provides quality gain control when only one near-end user is present, it can yield unsatisfactory results when multiple near-end users are speaking. In other words, when two or more users having - different voice levels are speaking, the above described average level estimate will incorporate all of the-voice levels and can thus lead to over-amplification and clipping when the loudest user(s) are speaking.

However, another exemplary embodiment solves this problem by considering the peak level of the near-end speech. Specifically, a running estimate of the peak near-end speech level is computed in block-wise fashion as:

$$r_{peak} = \text{Max} ( \beta r_{peak} + (1 - \beta) r_{v1} , r_{v1} )$$

where β is a real update coefficient (e.g., 0.995), and where the speech level for a frame $r_{v1}$ is computed as described above. Like the average level estimate $r_{av}$, the peak level estimate $r_{peak}$ is updated only when the voice activity detectors 150, 155 indicate a near-end single talk condition. By ensuring that the peak level estimate does not exceed a target value (e.g., -16dBoV), over-amplification can be avoided when multiple near-end users are present. For example, the control processor 160 can be configured to permit gain increases (as indicated by the average level estimate) only when the peak level estimate is below the target peak level.

Advantageously, the above described gain control techniques can be made still more robust by considering saturation of the analog-to-digital converter 140. For example, if gain increases (as indicated, for example, by the above described average and peak level estimates) are permitted only when the converter 140 is not saturated (as indicated, for example, when the output signal y(n) has a value equal to the minimum or maximum of the converter output range), or if the gain is decreased whenever saturation is detected, then signal clipping and the resulting distortion can be minimized.

According to an exemplary embodiment, saturation is monitored by maintaining a running saturation counter. At the end of each block or frame, the number of saturated samples L in the block or frame is determined (e.g., samples having the minimum or maximum converter output value are counted). If the number of saturated samples L in the block or frame is greater than or equal to a per-block saturation threshold T1 (e.g., 2), then the saturation counter is incremented by the number of saturated samples L. However, if the number of saturated samples L in the block or frame is less than the per-block threshold T1, then the saturation counter is decreased by a predetermined amount M (e.g, an integer in the range 1-5). Whenever the saturation counter becomes greater than or equal to an overall saturation threshold T2 (e.g., 50), the amplifier gain is stepped down, and the saturation counter is reset. However, as long as the saturation counter is less than the overall saturation threshold T2, the amplifier gain is adjusted in some suitable fashion (e.g., based on the above described average and peak level estimates). Note also that consecutive saturated samples can be assigned a larger weight (e.g., 2) as compared to single saturated samples (since a single saturation sample may be inaudible, while consecutive saturated samples are often disturbing to a receiving user). Empirical studies have shown the above described technique to be an effective and stable way of preventing saturation while maintaining appropriate gain control.

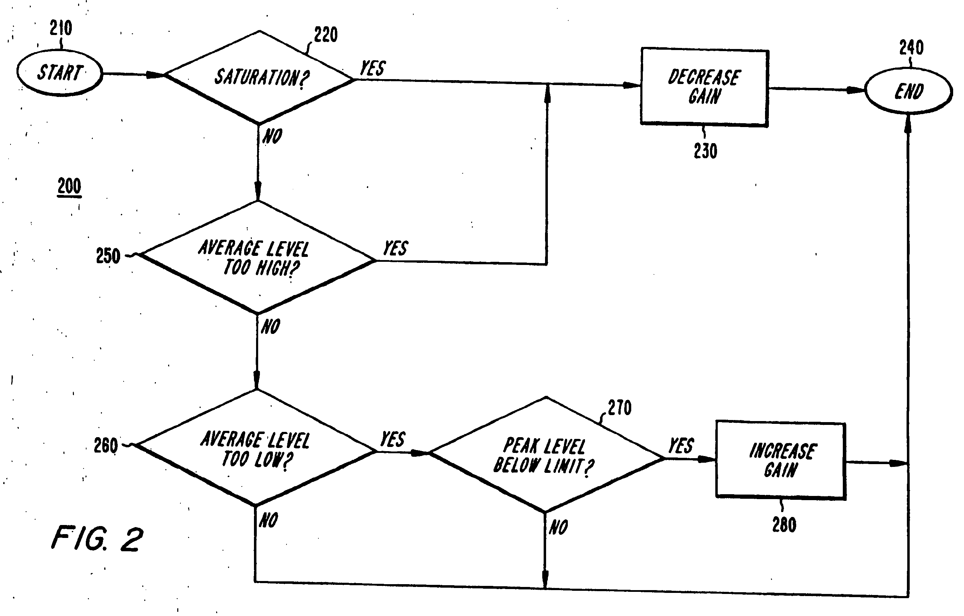

Generally, effective gain control can be accomplished, according to the invention, by making gain adjustment decisions based on any combination of the above described average, peak and saturation parameters. An exemplary decision algorithm 200 is depicted in Figure 2. The exemplary algorithm can be used, for example, to make amplifier gain adjustments once every several (e.g., 30-50) frames (where it is understood that the above described average level estimate, peak level estimate and saturation counter are updated at the end of each frame).

The decision algorithm begins at step 210, and at step 220 a determination is made whether the amplified and digitized signal $y(n)$ is saturated (e.g., whether the running saturation counter is greater than the saturation threshold T2). If so, then the amplifier gain is decreased (e.g., by 1-3dB) at step 230, and the decision algorithm is complete at step 240. If not, then a determination is made (at step 250) whether the signal level is too high (e.g., whether the average speech level estimate is too far above the target average level). If so, then the amplifier gain is decreased at step 230, and the decision algorithm is complete at step 240. If not, then a determination is made (at step 260) whether the signal level is too low (e.g., whether the average speech level estimate is too far below the target average level). If not, then the amplifier gain is not modified, and the decision algorithm is complete at step 240. If so, then a determination is made (at step 270) whether the peak signal level is within an appropriate range (e.g., whether the peak speech level estimate is less than the target peak value). If not, then the amplifier gain is not modified, and the decision algorithm is complete at step 240. If so, then the amplifier gain is increased (e.g., by 1-3dB) at step 280, and the decision algorithm is complete at step 240.

As note above, the disclosed gain control techniques provide correctly adjusted signal levels during the entirety of a conversation and are resilient to background noise and loudspeaker echo. Further, the disclosed techniques can account for multiple near-end speakers, as well as changes in the near-end environment (e.g., changes in user and microphone position).

Advantageously, the disclosed techniques can be made to work in conjunction with other adaptive signal processing algorithms, such as noise suppression algorithms and/or adaptive-filter echo canceling algorithms. For example, as is well known in the art, echo cancelers use an adaptive algorithm (e.g., Least Mean Squares, or Normalized Least Mean Squares) to develop an estimate of the echo $s(t)$ which is subtracted from the near-end signal $y(n)$ to provide an echo-canceled signal. According to the present invention, gain changes made using the above described techniques can be reported directly to such an echo canceler so that the adaptive filter coefficients of the echo canceler can be adjusted immediately. As a result, the echo canceler will not require additional time to adapt to level changes introduced by the above described techniques. When a storage buffer is positioned between the analog-to-digital converter 140 and the gain control processor 160 (e.g., so that the gain control processor 160 operates on stored samples), the resulting signal delay (i.e., the time required for analog gain changes at the amplifier 130 to be reflected in the output signal $y(n)$) is taken into account when reporting gain changes to the echo canceler (or other adaptive algorithm).

Those skilled in the art will appreciate that the present invention is not limited to the specific exemplary embodiments which have been described herein for purposes of illustration and that numerous alternative embodiments are also contemplated. For example, although the embodiments have been described with respect to real-time Internet telephony, the disclosed concepts are equally applicable in any communications context where adaptive gain control of a signal is necessary or desirable (e.g., voice mail and other digital telephony applications). The scope of the invention is therefore defined by the claims appended hereto, rather than the foregoing description, and all equivalents which are consistent with the meaning of the claims are intended to be embraced therein.

## Claims

1. An adaptive gain control arrangement (100) for adjusting an analog gain applied to a near-end analog signal output by a microphone (110) of a communications device, said communications device having a digital-to-analog converter (145) for converting a far-end digital signal that includes far-end speech into a far-end analog signal, a loudspeaker (120) for receiving said far-end analog signal and rendering it to at least one near-end user, a microphone (110) for receiving near-end noise, far-end echo and near-end speech from said at least one near-end user and producing the near-end analog signal, an adjustable-gain amplifier (130) for applying an analog gain to said near-end analog signal and an analog-to-digital converter (140) for converting said near-end analog signal into a near-end digital signal, said arrangement comprising:

   a first voice activity (150) detector for measuring solely on the near-end digital signal, wherein the first voice activity detector (150) is configured to indicate whether the near-end digital signal includes speech;
   a second voice activity detector (150) for measuring solely on the far-end digital signal, wherein the second voice activity detector (155) is configured to indicate whether the far-end digital signal includes speech; and
   a gain control processor (160) configured to monitor the near-end digital signal and receive indications from the first (150) and second (155) voice activity detectors indicating whether the near-end digital signal and the far-end digital signal include speech, and adjust the analog gain applied to the near-end analog signal, and update an estimate of the average level of near-end speech only when the near-end digital signal includes speech and the far-end digital signal does not include speech;
   wherein the gain control processor (160) is configured to estimate the average level of near-end speech and adjust the gain applied to the near-end analog signal to push the estimate of the average level of near-end speech toward a target average level; and
   wherein the gain control processor (160) adjusts the analog gain based only on periods when the near-end digital signal includes speech and the far-end digital signal does not include speech.

2. The adaptive gain control arrangement of claim 1, wherein said estimate of the average level of near-end speech is updated as a weighted sum of a previous estimate of the average level of near-end speech and a current near-end speech level,
   whereby the arrangement provides a balance between gain adaptation and system stability.

3. The adaptive gain control arrangement of claim 1, wherein said gain control processor (160) updates said estimate of the average level of near-end speech at the end of each of a succession of near-end signal sample blocks.

4. The adaptive gain control arrangement of claim 3, wherein said estimate of the average level of near-end speech is updated smoothly as a weighted sum of a previous estimate of the average level of near-end speech made for a previous near-end signal sample block and a current near-end speech level computed for a current near-end signal sample block.

5. The adaptive gain control arrangement of claim 4, wherein said near-end speech level for a current near-end signal sample block is computed as the difference between an average level of the near-end digital signal and an estimate of the near-end noise level.

6. The adaptive gain control arrangement of claim 5, wherein said estimate of the near-end noise level is computed during periods when said first (150) and second (155) voice activity detectors indicate that neither near-end speech nor far-end speech is present in said near-end digital signal and said far-end digital signal respectively.

7. The adaptive gain control arrangement of claim 3, wherein said succession of near-end signal sample blocks are speech frames.

8. The adaptive gain control arrangement of claim 3, wherein the gain control processor (160) adjusts the analog gain incrementally every several blocks.

9. The adaptive gain control arrangement of claim 8, wherein the number of blocks between adjustments of said analog gain varies over time.

10. The adaptive gain control arrangement of claim 1, wherein said gain control processor (160) adjusts the analog gain applied to said near-end analog signal so that an estimate of the peak near-end speech level in the near-end digital signal does not exceed a target peak level, and wherein the gain control processor (160) updates the estimate of the peak near-end speech level only when the near-end digital signal includes speech and the far-end digital signal does not include speech.

11. The adaptive gain control arrangement of claim 10, wherein the gain control processor (160) updates said estimate of the peak near-end speech level at the end of each of a succession of near-end signal sample blocks.

12. The adaptive gain control arrangement of claim 11, wherein the gain control processor (160) updates said estimate of the peak near-end speech level as the greatest one of either a weighted sum of a previous estimate of the peak near-end speech level made for a previous near-end signal sample block and a current near-end speech level computed for a current near-end signal sample block or said current near-end speech level computed for said current near-end signal sample block.

13. The adaptive gain control arrangement of claim 1, wherein said gain control processor (160) adjusts the analog gain applied to said near-end analog signal based on a determination of whether the near-end digital signal is saturated.

14. The adaptive gain control arrangement of claim 13, wherein said determination of whether the near-end digital signal is saturated is performed at the end of each of a succession of near-end signal sample blocks.

15. The adaptive gain control arrangement of claim 13, wherein said gain control processor (160) is adapted to decrease the analog gain applied to said near-end analog signal when the near-end digital signal is saturated.

16. The adaptive gain control arrangement of claim 1, wherein the gain control processor (160) is adapted to update said estimate of the average level of near-end speech to compensate for noise in the near-end digital signal.

17. The adaptive gain control arrangement of claim 1, wherein the gain control processor (160) is configured to report the adjustments of said analog gain applied to said near-end analog signal received from said microphone to an adaptive echo canceller, thereby enabling the echo canceller to immediately adjust adaptive filter coefficients.

18. The adaptive gain control arrangement of claim 17, wherein digital samples of the near-end digital signal are stored in a buffer, wherein said gain control processor (160) is configured to operate on stored samples of the near-end digital signal, and wherein said gain control processor (160) is configured to compensate for delays in adjusting the analog gain applied to said near-end analog signal received from said microphone (110) when reporting the gain adjustments to the echo canceller.

19. The adaptive gain control arrangement of claim 1, wherein the gain control processor (160) is configured to send its output to an adaptive noise suppressor that applies noise suppression algorithms to the output of the gain control processor (160).

20. The adaptive gain control arrangement of claim 1, wherein the gain control processor (160) is configured to adjust the analog gain applied to said near-end analog signal received from said microphone (110) based on said estimate of the average level of near-end speech, and at least one of an estimate of the peak near-end speech level and a determination of whether the near-end digital signal is saturated.

21. A method of adaptively controlling, via software control, an analog gain of an adjustable-gain amplifier (130) in a communication system wherein a near-end analog signal that includes near-end speech from at least one near-end user is received via a microphone (110), amplified by said adjustable-gain amplifier (130) by appliance of said analog gain and converted into a near-end digital signal by an analog-to-digital converter (140) and wherein a far-end digital signal that includes far-end speech is converted by a digital-to-analog converter (145) into a far-end analog signal that is received at a loudspeaker (120) and rendered by the loudspeaker (120) to said at least one near-end user, said method comprising the steps of:

determining, by a gain control processor (160), an estimate of the average level of near-end speech in said near-end digital signal;

measuring solely on the near-end digital signal, by a first voice activity detector (150), to determine whether the near-end digital signal includes speech;

measuring solely on the far-end digital signal, by a second voice activity detector (155), to determine whether the far-end digital signal includes speech;

receiving in said gain control processor (160), indications from the first (150) and second (155) voice activity detectors indicating whether the near-end digital signal and the far-end digital signal include speech;

updating, by the gain control processor (160), said estimate of the average level of near-end speech only when the near-end digital signal includes speech and the far-end digital signal does not include speech;

adjusting, by the gain control processor (160), said analog gain depending on a comparison of said estimate of the average level of near-end speech to said target average level;

applying, by said adjustable gain amplifier (130), said analog gain to said near-end analog signal in order to push said estimate of the average level of near-end speech towards said target average level;

wherein the step of adjusting the analog gain is performed based only on periods when the near-end digital signal includes near-end speech and the far-end digital signal does not include speech.

22. The method of claim 21, said step of adjusting said analog gain further comprising the steps of:

determining (220) whether the near-end digital signal is saturated;

decreasing (230) the analog gain applied to the near-end analog signal if the near-end digital signal is saturated;

comparing (250, 260) the estimate of the average level of near-end speech to said target average level if the near-end digital signal is not saturated;

decreasing (230) the analog gain applied to the near-end analog signal if the estimate of the average level of near-end speech is above said target average level;

comparing (270) an estimate of the peak near-end speech level in the near-end digital signal to a target peak level if the estimate of the average level of near-end speech is below said target average level; and

increasing (280) the analog gain applied to the near-end analog signal only if the estimate of the peak near-end speech level is below the target peak level.

23. The method of claim 21, wherein said estimate of the average level of near-end speech is updated as a weighted sum of a previous estimate of the average level of near-end speech and a current near-end speech level; whereby the method provides a balance between gain adaptation and system stability.

24. The method of claim 21, said step of updating further comprising updating said estimate of the average level of near-end speech at the end of each of a succession of near-end signal sample blocks.

25. The method of claim 24, wherein said estimate of the average level of near-end speech is updated smoothly as a weighted sum of a previous estimate of the average level of near-end speech made for a previous near-end signal sample block and a current near-end speech level computed for a current near-end signal sample block.

26. The method of claim 25, wherein said near-end speech level for a current near-end signal sample block is computed as the difference between an average level of the near-end digital signal and an estimate of the near-end noise level.

27. The method of claim 26, wherein said estimate of the near-end noise level is computed during periods when said first and second voice activity detectors indicate that neither near-end speech nor far-end speech is present in said near-end digital signal and said far-end digital signal respectively.

28. The method of claim 24, wherein said succession of near-end signal sample blocks is speech frames.

29. The method of claim 24, said step of adjusting further comprising adjusting said analog gain incrementally every several blocks.

30. The method of claim 29, wherein the number of blocks between adjustments of said analog gain varies over time.

**Patentansprüche**

1. Adaptive Verstärkungssteuerungsanordnung (100) zum Einstellen einer analogen Verstärkung, welche auf ein Analogsignal am nahen Ende angewendet wird, welches durch ein Mikrophon (110) von einer Kommunikationsvorrichtung ausgegeben wird, wobei die Kommunikationsvorrichtung einen Digital-zu-Analog-Umwandler (145) zum Umwandeln eines Digitalsignals am weiteren Ende, welches eine Sprache am weiteren Ende in einem Analogsignal am weiteren Ende enthält, einen Lautsprecher (120) zum Empfangen des Analogsignals am weiteren Ende und Übergeben dessen an zumindest einen Benutzer am nahen Ende, ein Mikrophon (110) zum Empfangen eines Rauschens am nahen Ende, eines Echos am weiteren Ende und einer Sprache am nahen Ende von dem zumindest einen Benutzer am nahen Ende und Erzeugen des Analogsignals am nahen Ende, einen einstellbaren Verstärker (130) zum Anlegen einer analogen Verstärkung an das Analogsignal am nahen Ende und einen Analog-zu-Digital-Umwandler (140) zum Umwandeln des Analogsignals am nahen Ende zu einem Digitalsignal am nahen Ende hat, wobei die Anordnung enthält:

   einen ersten Sprachaktivitäts-Erfasser (150) zum Messen von lediglich dem Digitalsignal am nahen Ende, wobei der erste Sprachaktivitäts-Erfasser (150) dazu konfiguriert ist, um anzuzeigen, ob das Digitalsignal am nahen Ende Sprache enthält;
   einen zweiten Sprachaktivitäts-Erfasser (155) zum Messen von lediglich dem Digitalsignal am weiteren Ende, wobei der zweite Sprachaktivitäts-Erfasser (155) dazu konfiguriert ist, um anzuzeigen, ob das Digitalsignal am weiteren Ende Sprache enthält; und
   einen Verstärkungssteuerungsprozessor (160), welcher dazu konfiguriert ist, das Digitalsignal am nahen Ende zu überwachen und Anzeigen vom ersten (150) und zweiten (155) Sprachaktivitäts-Erfasser zu empfangen, welche anzeigen, ob das Digitalsignal am nahen Ende und das Digitalsignal am weiteren Ende Sprache enthalten, und die Analogverstärkung, welche an das Analogsignal am nahen Ende angelegt ist, einzustellen, und eine Abschätzung von dem mittleren Pegel von Sprache am nahen Ende lediglich dann zu aktualisieren, wenn das Digitalsignal am nahen Ende Sprache enthält und das Digitalsignal am weiteren Ende keine Sprache enthält;
   wobei der Verstärkungssteuerungsprozessor (160) dazu konfiguriert ist, den mittleren Pegel von Sprache am nahen Ende abzuschätzen und die am Analogsignal am nahen Ende angelegte Verstärkung einzustellen, um die Abschätzung von dem mittleren Pegel von Sprache am nahen Ende auf einen gezielten mittleren Pegel zu drängen; und
   wobei der Verstärkungssteuerungsprozessor (160) die analoge Verstärkung, basierend lediglich auf Perioden einstellt, wenn das Digitalsignal am nahen Ende Sprache enthält und das Digitalsignal am weiteren Ende keine Sprache enthält.

2. Adaptive Verstärkungssteuerungsanordnung nach Anspruch 1, bei welcher die Abschätzung von dem mittleren Pegel von Sprache am nahen Ende als eine gewichtete Summe von einer vorherigen Abschätzung von dem mittleren Pegel von Sprache am nahen Ende und einem derzeitigen Pegel von Sprache am nahen Ende aktualisiert ist, wobei die Anordnung eine Balance zwischen einer Verstärkungsadaption und einer Systemstabilität bereitstellt.

3. Adaptive Verstärkungssteuerungsanordnung nach Anspruch 1, bei welcher der Verstärkungssteuerungsprozessor (160) die Abschätzung des mittleren Pegels der Sprache am nahen Ende an dem Ende von jedem von einem Ablauf von Abtastblöcken eines Signals am nahen Ende aktualisiert.

4. Adaptive Verstärkungssteuerungsanordnung nach Anspruch 3, bei welcher die Abschätzung des mittleren Pegels von Sprache am nahen Ende sanft als eine gewichtete Summe von einer vorherigen Abschätzung des mittleren Pegels von Sprache am nahen Ende aktualisiert ist, welche für einen vorherigen Abtastblock eines Signals am nahen Ende und einem derzeitigen Pegel einer Sprache am nahen Ende, welcher für einen derzeitigen Abtastblock eines Signals am nahen Ende berechnet ist, erstellt ist.

5. Adaptive Verstärkungssteuerungsanordnung nach Anspruch 4, bei welcher der Sprachpegel am nahen Ende für einen derzeitigen Abtastblock eines Signals am nahen Ende als die Differenz zwischen einem mittleren Pegel des Digitalsignals am nahen Ende und einer Abschätzung des Rauschpegels am nahen Ende berechnet ist.

6. Adaptive Verstärkungssteuerungsanordnung nach Anspruch 5, bei welcher die Abschätzung des Rauschpegels am nahen Ende innerhalb von Perioden berechnet ist, bei denen der erste (150) und zweite (155) Sprachaktivitäts-Erfasser anzeigen, dass weder Sprache am nahen Ende noch Sprache am weiteren Ende jeweils im Digitalsignal am nahen Ende als auch dem Digitalsignal am weiteren Ende vorliegen.

7. Adaptive Verstärkungssteuerungsanordnung nach Anspruch 3, bei welcher der Ablauf von Abtastblöcken eines Signals am nahen Ende gleich Sprachrahmen sind.

8. Adaptive Verstärkungssteuerungsanordnung nach Anspruch 3, bei welcher der Verstärkungssteuerungsprozessor (160) die analoge Verstärkung alle einzelne Blöcke stufenweise einstellt.

9. Adaptive Verstärkungssteuerungsanordnung nach Anspruch 8, bei welcher die Anzahl von Blöcken zwischen Einstellungen von der analogen Verstärkung über die Zeit variiert.

10. Adaptive Verstärkungssteuerungsanordnung nach Anspruch 1, bei welcher der Verstärkungssteuerungsprozessor (160) die analoge Verstärkung, welche an das Analogsignal am nahen Ende angelegt ist, derart einstellt, dass eine Abschätzung von dem Spitzenpegel der Sprache am nahen Ende im Digitalsignal am nahen Ende einen Ziel-Spitzenpegel nicht übersteigt, und wobei der Verstärkungssteuerungsprozessor (160) die Abschätzung von dem Spitzenpegel der Sprache am nahen Ende lediglich dann aktualisiert, wenn das Digitalsignal am nahen Ende Sprache enthält und das Digitalsignal am weiteren Ende keine Sprache enthält.

11. Adaptive Verstärkungssteuerungsanordnung nach Anspruch 10, bei welcher der Verstärkungssteuerungsprozessor (160) die Abschätzung des Spitzenpegels der Sprache am nahen Ende am Ende von jedem von einem Ablauf von Abtastblöcken eines Signals am nahen Ende aktualisiert.

12. Adaptive Verstärkungssteuerungsanordnung nach Anspruch 11, bei welcher der Verstärkungssteuerungsprozessor (160) die Abschätzung von dem Spitzenpegel der Sprache am nahen Ende als das Größte aus einer gewichteten Summe von einer vorherigen Abschätzung des Spitzenpegels der Sprache am nahen Ende, welche für einen vorherigen Abtastblock des Signals am nahen Ende und einem derzeitigen Sprachpegel am nahen Ende, welcher für einen derzeitigen Abtastblock des Signals am nahen Ende berechnet ist, erstellt ist, oder der derzeitige Sprachpegel am nahen Ende, welcher für den derzeitigen Abtastblock des Signals am nahen Ende berechnet ist, aktualisiert.

13. Adaptive Verstärkungssteuerungsanordnung nach Anspruch 1, bei welcher der Verstärkungssteuerungsprozessor (160) die analoge Verstärkung, welche an das Analogsignal am nahen Ende angelegt ist, basierend auf einer Bestimmung darüber einstellt, ob das Digitalsignal am nahen Ende gesättigt ist.

14. Adaptive Verstärkungssteuerungsanordnung nach Anspruch 13, bei welcher die Bestimmung darüber, ob das Digitalsignal am nahen Ende gesättigt ist, am Ende von jedem von einem Ablauf von Abtastblöcken des Signals am nahen Ende durchgeführt wird.

15. Adaptive Verstärkungssteuerungsanordnung nach Anspruch 13, bei welcher der Verstärkungssteuerungsprozessor (160) dazu angepasst ist, die analoge Verstärkung, welche an das Analogsignal am nahen Ende angelegt ist, zu verringern, wenn das Digitalsignal am nahen Ende gesättigt ist.

16. Adaptive Verstärkungssteuerungsanordnung nach Anspruch 1, bei welcher der Verstärkungssteuerungsprozessor (160) dazu angepasst ist, die Abschätzung des mittleren Pegels der Sprache am nahen Ende zu aktualisieren, um Rauschen im Digitalsignal am nahen Ende zu kompensieren.

17. Adaptive Verstärkungssteuerungsanordnung nach Anspruch 1, bei welcher der Verstärkungssteuerungsprozessor (160) dazu konfiguriert ist, um die Einstellungen von der analogen Verstärkung, welche an das Analogsignal am nahen Ende angelegt ist, welches vom Mikrophon empfangen wird, an einen adaptiven Echolöscher zu melden, wodurch es dem Echolöscher ermöglicht wird, unmittelbar adaptive Filterkoeffizienten einzustellen.

18. Adaptive Verstärkungssteuerungsanordnung nach Anspruch 17, bei welcher digitale Abtastungen des Digitalsignals am nahen Ende in einem Puffer gespeichert sind, wobei der Verstärkungssteuerungsprozessor (160) dazu konfiguriert ist, auf gespeicherten Abtastungen von dem Digitalsignal am nahen Ende zu arbeiten, und wobei der Verstärkungssteuerungsprozessor (160) dazu konfiguriert ist, Verzögerungen zu kompensieren, indem die analoge Verstärkung, welche an das Analogsignal am nahen Ende angewendet wird, welches von dem Mikrophon (110) empfangen wird, eingestellt wird, wenn die Verstärkungs-Einstellungen an den Echolöscher gemeldet werden.

19. Adaptive Verstärkungssteuerungsanordnung nach Anspruch 1, bei welcher der Verstärkungssteuerungsprozessor (160) dazu konfiguriert ist, seine Ausgabe an einen adaptiven Rauschunterdrücker zu senden, welcher Rauschunterdrückungs-Algorithmen an die Ausgabe des Verstärkungssteuerungsprozessors (160) anwendet.

**20.** Adaptive Verstärkungssteuerungsanordnung nach Anspruch 1, bei welcher der Verstärkungssteuerungsprozessor (160) dazu konfiguriert ist, um die analoge Verstärkung, welche an das Analogsignal am nahen Ende angelegt ist, welches von dem Mikrophon (110) empfangen wird, basierend auf der Abschätzung des mittleren Pegels von der Sprache am nahen Ende, und zumindest einer aus einer Abschätzung des Spitzenpegels der Sprache am nahen Ende und einer Bestimmung darüber, ob das Digitalsignal am nahen Ende gesättigt ist, einzustellen.

**21.** Verfahren zur adaptiven Steuerung, über eine Software-Steuerung, von einer analogen Verstärkung eines einstellbaren Verstärkers (130) in einem Kommunikationssystem, bei welchem ein Analogsignal am nahen Ende, welches Sprache am nahen Ende von zumindest einem Benutzer am nahen Ende enthält, über ein Mikrophon (110) empfangen wird, durch den einstellbaren Verstärker (130) durch Anwenden der analogen Verstärkung verstärkt wird und in ein Digitalsignal am nahen Ende durch einen Analog-zu-Digital-Umwandler (140) umgewandelt wird, und wobei ein Digitalsignal am weiteren Ende, welches Sprache am weiteren Ende enthält, durch einen Digital-zu-Analog-Umwandler (145) in ein Analogsignal am weiteren Ende umgewandelt wird, welches an einem Lautsprecher (120) empfangen wird, und durch den Lautsprecher (120) an den zumindest einen Benutzer am nahen Ende weitergegeben wird, wobei das Verfahren die Schritte enthält:

Bestimmen, durch einen Verstärkungssteuerungsprozessor (160), von einer Abschätzung des mittleren Pegels der Sprache am nahen Ende in dem Digitalsignal am nahen Ende;
Messen, lediglich auf dem Digitalsignal am nahen Ende, durch einen ersten Sprachaktivitäts-Erfasser (150), um zu bestimmen, ob das Digitalsignal am nahen Ende Sprache enthält;
Messen, lediglich auf dem Digitalsignal am weiteren Ende, durch einen zweiten Sprachaktivitäts-Erfasser (155), um zu bestimmen, ob das Digitalsignal am weiteren Ende Sprache enthält;
Empfangen, in dem Verstärkungssteuerungsprozessor (160), von Anzeigen von dem ersten (150) und zweiten (155) Sprachaktivitäts-Erfasser, welche anzeigen, ob das Digitalsignal am nahen Ende und das Digitalsignal am weiteren Ende Sprache enthalten;
Aktualisieren, durch den Verstärkungssteuerungsprozessor (160), von der Abschätzung von dem mittleren Pegel von Sprache am nahen Ende lediglich dann, wenn das Digitalsignal am nahen Ende Sprache enthält und das Digitalsignal am weiteren Ende keine Sprache enthält;
Einstellen, durch den Verstärkungssteuerungsprozessor (160), der analogen Verstärkung in Abhängigkeit von einem Vergleich von der Abschätzung des mittleren Pegels der Sprache am nahen Ende mit dem gezielten mittleren Pegel;
Anlegen, durch den einstellbaren Verstärker (130), von der analogen Verstärkung auf das Analogsignal am nahen Ende, um die Abschätzung von dem mittleren Pegel von der Sprache am nahen Ende auf den gezielten mittleren Pegel zu drücken;
wobei der Schritt des Einstellens der analogen Verstärkung lediglich basierend auf Perioden durchgeführt wird, wenn das Digitalsignal am nahen Ende Sprache am nahen Ende enthält und das Digitalsignal am weiteren Ende keine Sprache enthält.

**22.** Verfahren nach Anspruch 21, bei welchem der Schritt des Einstellens der analogen Verstärkung ferner die Schritte enthält:

Bestimmen (220), ob das Digitalsignal am nahen Ende gesättigt ist;
Verringern (230) der analogen Verstärkung, welche an das Analogsignal am nahen Ende angelegt ist, wenn das Digitalsignal am nahen Ende gesättigt ist;
Vergleichen (250, 260) der Abschätzung des mittleren Pegels der Sprache am nahen Ende mit dem gezielten mittleren Pegel, wenn das Digitalsignal am nahen Ende nicht gesättigt ist;
Verringern (230) der analogen Verstärkung, welche an das Analogsignal am nahen Ende angelegt ist, wenn die Abschätzung von dem mittleren Pegel von der Sprache am nahen Ende oberhalb des gezielten mittleren Pegels ist;
Vergleichen (270) von einer Abschätzung des Spitzenpegels der Sprache am nahen Ende in dem Digitalsignal am nahen Ende mit einem gezielten Spitzenpegel, wenn die Abschätzung des mittleren Pegels der Sprache am nahen Ende unterhalb des gezielten mittleren Pegels ist; und
Erhöhen (280) der analogen Verstärkung, welche an das Analogsignal am nahen Ende angelegt ist, lediglich dann, wenn die Abschätzung des Spitzenpegels der Sprache am nahen Ende unterhalb des gezielten Spitzenpegels ist.

**23.** Verfahren nach Anspruch 21, bei welchem die Abschätzung des mittleren Pegels der Sprache am nahen Ende als eine gewichtete Summe von einer vorherigen Abschätzung von dem mittleren Pegel von der Sprache am nahen Ende und einem derzeitigen Sprachpegel am nahen Ende aktualisiert wird;

wobei das Verfahren eine Balance zwischen einer Verstärkungsadaption und einer Systemstabilität bereitstellt.

**24.** Verfahren nach Anspruch 21, wobei der Schritt des Aktualisierens ferner ein Aktualisieren der Abschätzung des mittleren Pegels der Sprache am nahen Ende am Ende von jedem aus einem Ablauf von Abtastblöcken des Signals am nahen Ende enthält.

**25.** Verfahren nach Anspruch 24, bei welchem die Abschätzung des mittleren Pegels der Sprache am nahen Ende als eine gewichtete Summe von einer vorherigen Abschätzung des mittleren Pegels von der Sprache am nahen Ende, welche für einen vorherigen Abtastblock des Signals am nahen Ende erstellt ist, und einen derzeitigen Sprachpegel am nahen Ende, welcher für einen derzeitigen Abtastblock des Signals am nahen Ende berechnet ist, sanft aktualisiert wird.

**26.** Verfahren nach Anspruch 25, bei welchem der Sprachpegel am nahen Ende für einen derzeitigen Abtastblock des Signals am nahen Ende als die Differenz zwischen einem mittleren Pegel von dem Digitalsignal am nahen Ende und einer Abschätzung des Rauschpegels am nahen Ende berechnet wird.

**27.** Verfahren nach Anspruch 26, bei welchem die Abschätzung des Rauschpegels am nahen Ende während Perioden berechnet wird, bei welchen der erste und zweite Sprachaktivitäts-Erfasser anzeigen, dass weder Sprache am nahen Ende noch Sprache am weiteren Ende jeweils in dem Digitalsignal am nahen Ende und dem Digitalsignal am weiteren Ende vorliegen.

**28.** Verfahren nach Anspruch 24, bei welchem der Ablauf von Abtastblöcken des Signals am nahen Ende gleich Sprachrahmen sind.

**29.** Verfahren nach Anspruch 24, bei welchem der Schritt des Einstellens ferner alle einzelne Blöcke ein stufenförmiges Einstellen der analogen Verstärkung enthält.

**30.** Verfahren nach Anspruch 29, bei welchem die Anzahl von Blöcken zwischen Einstellungen von der analogen Verstärkung über die Zeit variiert.


**Revendications**

**1.** Dispositif de commande de gain adaptatif (100) pour ajuster un gain analogique appliqué à un signal analogique local émis par un microphone (110) d'un appareil de communication, ledit appareil de communication ayant un convertisseur numérique - analogique (145) pour convertir un signal numérique distant qui inclut de la voix distante en un signal analogique local, un haut-parleur (120) pour recevoir ledit signal analogique distant et le remettre à au moins un utilisateur local, un microphone (110) pour recevoir du bruit local, de l'écho distant et de la voix locale à partir dudit au moins un utilisateur local et produire le signal analogique local, un amplificateur de gain ajustable (130) pour appliquer un gain analogique audit signal analogique local et un convertisseur analogique - numérique (140) pour convertir ledit signal analogique local en un signal numérique local, ledit dispositif comprenant :

un premier détecteur d'activité vocale (150) pour mesurer uniquement sur le signal numérique local, dans lequel le premier détecteur d'activité vocale (150) est configuré pour indiquer si le signal numérique local comprend de la voix ;

un second détecteur d'activité vocale (150) pour mesurer uniquement le signal numérique distant, dans lequel le second détecteur d'activité vocale (155) est configuré pour indiquer si le signal numérique distant inclut de la voix ; et

un processeur de commande de gain (160) configuré pour surveiller le signal numérique local et recevoir des indications du premier (150) et du second (155) détecteur d'activité vocale en indiquant si le signal numérique local et le signal numérique distant incluent de la voix, et ajuster le gain analogique appliqué au signal analogique local, et mettre à jour une estimation du niveau moyen de voix locale uniquement lorsque le signal numérique local inclut de la voix et que le signal numérique distant n'inclut pas de voix ;

dans lequel le processeur de commande de gain (160) est configuré pour estimer le niveau moyen de voix locale et ajuster le gain appliqué au signal analogique local pour pousser l'estimation du niveau moyen de voix locale vers un niveau moyen cible ; et

dans lequel le processeur de commande de gain (160) ajuste le gain analogique uniquement sur la base de périodes pendant lesquelles le signal numérique local inclut de la voix et le signal numérique distant n'inclut pas de voix.

2.  Dispositif de commande de gain adaptatif selon la revendication 1, dans lequel ladite estimation du niveau moyen de voix locale est mise à jour sous forme de somme pondérée d'une estimation précédente du niveau moyen de voix locale et d'un niveau de voix locale actuel,
de sorte que le dispositif propose un équilibre entre l'adaptation du gain et la stabilité du système.

3.  Dispositif de commande de gain adaptatif selon la revendication 1, dans lequel ledit processeur de commande de gain (160) met à jour ladite estimation du niveau moyen de voix locale à la fin de chaque bloc d'une succession de blocs d'échantillons de signal local.

4.  Dispositif de commande de gain adaptatif selon la revendication 3, dans lequel ladite estimation du niveau moyen de voix locale est mise à jour aisément sous forme de somme pondérée d'une estimation précédente du niveau moyen de voix locale réalisée pour un bloc d'échantillons de signal local précédent et d'un niveau de voix locale actuel calculé pour un bloc d'échantillons de signal local actuel.

5.  Dispositif de commande de gain adaptatif selon la revendication 4, dans lequel ledit niveau de voix locale pour un bloc d'échantillons de signal local actuel est calculé en tant que différence entre un niveau moyen du signal numérique local et une estimation du niveau de bruit local.

6.  Dispositif de commande de gain adaptatif selon la revendication 5, dans lequel ladite estimation du niveau de bruit local est calculée au cours de périodes pendant lesquelles ledit premier (150) et ledit second (155) détecteur d'activité vocale indiquent l'absence de voix locale et distante dans ledit signal numérique local et ledit signal numérique distant, respectivement.

7.  Dispositif de commande de gain adaptatif selon la revendication 3, dans lequel ladite succession de blocs d'échantillons de signal local est une trame vocale.

8.  Dispositif de commande de gain adaptatif selon la revendication 3, dans lequel le processeur de commande de gain (160) ajuste le gain analogique de manière incrémentale à intervalles réguliers de plusieurs blocs.

9.  Dispositif de commande de gain adaptatif selon la revendication 8, dans lequel le nombre de blocs entre les ajustements dudit gain analogique varie dans le temps.

10. Dispositif de commande de gain adaptatif selon la revendication 1, dans lequel ledit processeur de commande de gain (160) ajuste le gain analogique appliqué audit signal analogique local de sorte qu'une estimation du niveau de voix locale maximal dans le signal numérique local ne dépasse pas un niveau maximal cible, et dans lequel le processeur de commande de gain (160) met à jour l'estimation du niveau de voix locale maximal uniquement lorsque le signal numérique local inclut de la voix et le signal numérique distant n'inclut pas de voix.

11. Dispositif de commande de gain adaptatif selon la revendication 10, dans lequel ledit processeur de commande de gain (160) met à jour ladite estimation du niveau de voix locale maximal à la fin de chaque bloc d'une succession de blocs d'échantillons de signal local.

12. Dispositif de commande de gain adaptatif selon la revendication 11, dans lequel le processeur de commande de gain (160) met à jour ladite estimation du niveau de voix locale maximal en tant que valeur la plus grande de l'une ou l'autre d'une somme pondérée d'une estimation précédente du niveau de voix locale maximal réalisée pour un précédent bloc d'échantillons de signal local et d'un niveau de voix locale actuel calculé pour un bloc d'échantillons de signal local actuel ou dudit niveau de voix locale actuel calculé pour ledit bloc d'échantillons de signal local actuel.

13. Dispositif de commande de gain adaptatif selon la revendication 1, dans lequel ledit processeur de commande de gain (160) ajuste le gain analogique appliqué audit signal analogique local à partir d'une détermination de la saturation ou non du signal numérique local.

14. Dispositif de commande de gain adaptatif selon la revendication 13, dans lequel ladite détermination de saturation ou non du signal numérique local est réalisée à la fin de chaque bloc d'une succession de blocs d'échantillons de signal local.

**15.** Dispositif de commande de gain adaptatif selon la revendication 13, dans lequel ledit processeur de commande de gain (160) est conçu pour réduire le gain analogique appliqué audit signal analogique local lorsque le signal numérique local est saturé.

**16.** Dispositif de commande de gain adaptatif selon la revendication 1, dans lequel le processeur de commande de gain (160) est conçu pour mettre à jour ladite estimation du niveau moyen de voix locale afin de compenser le bruit du signal numérique local.

**17.** Dispositif de commande de gain adaptatif selon la revendication 1, dans lequel ledit processeur de commande de gain (160) est conçu pour signaler les ajustements dudit gain analogique appliqué audit signal analogique local reçu dudit microphone à un suppresseur d'écho adaptatif, ce qui permet au suppresseur d'écho d'ajuster immédiatement des coefficients de filtre adaptatif.

**18.** Dispositif de commande de gain adaptatif selon la revendication 17, dans lequel des échantillons numériques du signal numérique local sont stockés dans un tampon, dans lequel ledit processeur de commande de gain (160) est configuré pour opérer sur des échantillons stockés du signal numérique local, et dans lequel ledit processeur de commande de gain (160) est configuré pour compenser les retards en ajustant le gain analogique appliqué audit signal analogique local reçu dudit microphone (110) lors du signalement des ajustements de gain au suppresseur d'écho.

**19.** Dispositif de commande de gain adaptatif selon la revendication 1, dans lequel le processeur de commande de gain (160) est configuré pour envoyer sa sortie à un éliminateur de parasite adaptatif qui applique des algorithmes de suppression de bruit à la sortie du processeur de commande de gain (160).

**20.** Dispositif de commande de gain adaptatif selon la revendication 1, dans lequel le processeur de commande de gain (160) est configuré pour ajuster le gain analogique appliqué audit signal analogique local reçu dudit microphone (110) à partir de ladite estimation du niveau moyen de voix locale, et au moins l'une d'une estimation du niveau de voix locale maximal et d'une détermination de la saturation ou non du signal numérique local.

**21.** Procédé de commande adaptative, par commande logicielle, d'un gain analogique d'un amplificateur de gain ajustable (130) dans un système de communication dans lequel un signal analogique local qui inclut de la voix locale provenant d'au moins un utilisateur local est reçu par l'intermédiaire d'un microphone (110), amplifié par ledit amplificateur de gain ajustable (130) par l'application dudit gain analogique et converti en un signal numérique local par un convertisseur analogique - numérique (140) et dans lequel un signal numérique distant qui inclut de la voix distante est converti par un convertisseur numérique - analogique (145) en un signal analogique distant qui est reçu au niveau d'un haut-parleur (120) et remis par le haut-parleur (120) audit au moins un utilisateur local, ledit procédé comprenant les étapes consistant à:

déterminer, par un processeur de commande de gain (160), une estimation du niveau moyen de voix locale dans ledit signal numérique local ;
mesurer uniquement sur le signal numérique local, par un premier détecteur d'activité vocale (150), afin de déterminer si le signal numérique local inclut de la voix ;
mesurer uniquement sur le signal numérique distant, par un second détecteur d'activité vocale (155), afin de déterminer si le signal numérique distant inclut de la voix ;
recevoir dans ledit processeur de commande de gain (160) des indications provenant du premier (150) et du second (155) détecteur d'activité vocale indiquant si le signal numérique local et le signal numérique distant incluent de la voix ;
mettre à jour, par le processeur de commande de gain (160), ladite estimation du niveau moyen de voix locale uniquement lorsque le signal numérique local inclut de la voix et le signal numérique distant n'inclut pas de voix ;
ajuster, par le processeur de commande de gain (160), ledit gain analogique en fonction d'une comparaison entre ladite estimation du niveau moyen de voix locale et ledit niveau moyen cible ;
appliquer, par ledit amplificateur de gain ajustable (130), ledit gain analogique audit signal analogique local afin de pousser ladite estimation du niveau moyen de voix locale vers ledit niveau moyen cible ;
dans lequel l'étape d'ajustement du gain analogique est réalisée uniquement sur la base de périodes pendant lesquelles le signal numérique local inclut de la voix locale et le signal numérique distant n'inclut pas de voix.

**22.** Procédé selon la revendication 21, ladite étape d'ajustement dudit gain analogique comprenant en outre les étapes consistant à:

déterminer (220) si le signal numérique local est saturé;

diminuer (230) le gain analogique appliqué au signal analogique local si le signal numérique local est saturé ;

comparer (250, 260) l'estimation du niveau moyen de voix locale avec ledit niveau moyen cible si le signal numérique local n'est pas saturé ;

diminuer (230) le gain analogique appliqué au signal analogique local si l'estimation du niveau moyen de voix locale est supérieure audit niveau moyen cible ;

comparer (270) une estimation du niveau de voix locale maximal dans le signal numérique local à un niveau maximal cible si l'estimation du niveau moyen de voix locale est inférieure audit niveau moyen cible ; et

augmenter (280) le gain analogique appliqué au signal analogique local uniquement si l'estimation du niveau de voix locale maximal est inférieure au niveau maximal cible.

23. Procédé selon la revendication 21, dans lequel ladite estimation du niveau moyen de voix locale est mise à jour sous forme de somme pondérée d'une estimation précédente du niveau moyen de voix locale et d'un niveau de voix locale actuel ;

de sorte que le procédé propose un équilibre entre l'adaptation du gain et la stabilité du système.

24. Procédé selon la revendication 21, ladite étape de mise à jour comprenant de plus la mise à jour de ladite estimation du niveau moyen de voix locale à la fin de chaque bloc d'une succession de blocs d'échantillons de signal local.

25. Procédé selon la revendication 24, dans lequel ladite estimation du niveau moyen de voix locale est mise à jour aisément sous forme de somme pondérée d'une estimation précédente du niveau moyen de voix locale réalisée pour un bloc d'échantillons de signal local précédent et d'un niveau de voix locale actuel calculé pour un bloc d'échantillons de signal local actuel.

26. Procédé selon la revendication 25, dans lequel ledit niveau de voix locale pour un bloc d'échantillons de signal local actuel est calculé en tant que différence entre un niveau moyen du signal numérique local et une estimation du niveau de bruit local.

27. Procédé selon la revendication 26, dans lequel ladite estimation du niveau de bruit local est calculée au cours de périodes pendant lesquelles ledit premier et ledit second détecteur d'activité vocale indiquent l'absence de voix locale et distante dans ledit signal numérique local et ledit signal numérique distant, respectivement.

28. Procédé selon la revendication 24, dans lequel ladite succession de blocs d'échantillons de signal local est une trame vocale.

29. Procédé selon la revendication 24, ladite étape d'ajustement comprenant de plus l'ajustement dudit gain analogique de manière incrémentale à intervalles réguliers de plusieurs blocs.

30. Procédé selon la revendication 29, dans lequel le nombre de blocs entre les ajustements dudit gain analogique varie dans le temps.

FIG. 1

FIG. 2

EP 1 142 288 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5357567 A

- EP 0765066 A2

**Non-patent literature cited in the description**

- **WHITMAN D. REEVE.** Subscriber Loop Signaling and Transmission Handbook. IEEE Press, 1992, 95-97